(19) Europäisches Patentamt
European Patent Office
Office européen des brevets

(11) **EP 4 158 622 B1**

(12) **FASCICULE DE BREVET EUROPEEN**

(45) Date de publication et mention
de la délivrance du brevet:
**21.08.2024 Bulletin 2024/34**

(21) Numéro de dépôt: **21708020.9**

(22) Date de dépôt: **02.03.2021**

(51) Classification Internationale des Brevets (IPC):
**G10L 17/02** *(2013.01)* **G10L 17/04** *(2013.01)*
**G10L 17/08** *(2013.01)*

(52) Classification Coopérative des Brevets (CPC):
**G10L 17/02;** G10L 17/04; G10L 17/08

(86) Numéro de dépôt international:
**PCT/EP2021/055164**

(87) Numéro de publication internationale:
**WO 2021/239280 (02.12.2021 Gazette 2021/48)**

(54) **PROCEDE D'IDENTIFICATION D'UN LOCUTEUR**

SYSTEM ZUR IDENTIFIZIERUNG EINES LAUTSPRECHERS

SYSTEM FOR IDENTIFYING A SPEAKER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.05.2020 FR 2005690**

(43) Date de publication de la demande:
**05.04.2023 Bulletin 2023/14**

(73) Titulaire: **Ampere SAS
92100 Boulogne-Billancourt (FR)**

(72) Inventeur: **ROSSELLO, Norbert
06410 BIOT (FR)**

(56) Documents cités:
- TIWARI VIBHA: "MFCC and its applications in speaker recognition", INTERNATIONAL JOURNAL ON EMERGING TECHNOLOGIES, 1 January 2010 (2010-01-01), XP055773015, Retrieved from the Internet <URL:http://citeseerx.ist.psu.edu/viewdoc/download?doi=10.1.1.689.4627&rep=rep1&type=pdf> [retrieved on 20210205]
- PODDAR ARNAB ET AL: "Speaker verification with short utterances: a review of challenges, trends and opportunities", IET BIOMETRICS, IEEE, MICHAEL FARADAY HOUSE, SIX HILLS WAY, STEVENAGE, HERTS. SG1 2AY, UK, vol. 7, no. 2, 1 March 2018 (2018-03-01), pages 91 - 101, XP006076454, ISSN: 2047-4938, DOI: 10.1049/IET-BMT.2017.0065

**Description**

La présente invention concerne de manière générale le domaine de l'identification de personnes sur la base de leurs voix.

Elle trouve une application particulièrement avantageuse dans l'identification d'un usager d'un véhicule automobile.

Elle concerne plus particulièrement un procédé d'identification d'un locuteur particulier parmi un ensemble de locuteurs, au moyen d'un calculateur qui comporte une mémoire informatique dans laquelle est enregistrée au moins une signature vocale de référence associée à un des locuteurs dudit ensemble, le procédé comprenant des étapes de :

- acquisition d'un signal vocal d'identification émis par le locuteur particulier,
- élaboration d'une signature vocale d'identification en fonction dudit signal vocal d'identification,
- comparaison de ladite signature vocale d'identification avec l'au moins une signature vocale de référence enregistrée dans la mémoire informatique, et
- identification du locuteur particulier en fonction du résultat de ladite comparaison. Elle concerne également un procédé d'enregistrement d'un nouveau locuteur dans la mémoire du calculateur.

Elle concerne enfin un véhicule automobile comportant les moyens techniques nécessaires à la mise en oeuvre de l'un et/ou l'autre de ces deux procédés.

Il est connu d'utiliser des locutions de réveil pour sortir un appareil électronique de veille afin de pouvoir ensuite commander une fonction particulière. Un exemple de locution de réveil est « Hello Google ». Cette locution permet de sortir de veille un appareil Android® afin qu'il puisse ensuite effectuer une action particulière (rechercher une réponse à une question, allumer une lumière...).

Ces locutions de réveil sont choisies de façon à être particulièrement courtes, de manière à être rapides à prononcer par le locuteur.

Une des difficultés est que le locuteur a tendance à prononcer cette locution de façon rapide et parfois tronquée. On constate alors des difficultés de détection de cette locution par l'appareil.

Dès lors, on comprend qu'il ne sera pas possible d'identifier de façon fiable le locuteur sur la base de cette seule locution de réveil.

Or, notamment dans le domaine automobile, on souhaite pouvoir identifier les passagers qui émettent des commandes vocales afin par exemple de s'assurer s'ils sont autorisés ou non à émettre ces commandes. A titre d'exemple, on souhaite pouvoir s'assurer que le passager qui commande l'ouverture totale de sa fenêtre est autorisé à le faire. La publication "MFCC and its applications in speaker récognition" par Vibha Tiwari dans International Journal on Emerging technologies publié en 2010 divulgue une technique d'identification du locuteur.

Une solution connue dans le domaine de la biométrie vocale pour identifier une personne consiste à lui demander d'émettre une locution plus longue, telles que « Ma voix est le mot de passe ». Grâce à la longueur de cette locution, il s'avère alors possible d'identifier le locuteur parmi les différents locuteurs qui se sont enregistrées dans le système.

L'inconvénient de ces locutions est que, du fait de leurs grandes longueurs, elles s'avèrent trop fastidieuses à prononcer pour être employées régulièrement.

Afin de remédier à l'inconvénient précité de l'état de la technique, la présente invention propose d'utiliser des locutions courtes puis de les enrichir informatiquement et de façon invisible pour les usagers, afin de pouvoir identifier avec une grande fiabilité toute personne qui émet une locution.

Plus particulièrement, on propose selon l'invention un procédé d'identification tel que défini dans l'introduction, dans lequel il est prévu, en amont, qu'au moins une signature vocale de référence enregistrée dans la mémoire informatique a été déterminée en fonction d'un signal vocal d'enregistrement et d'un signal d'extension prédéterminé, et dans lequel il est prévu, avant l'étape d'élaboration, une étape de génération d'un signal complet qui comprend ledit signal vocal d'identification et ledit signal d'extension prédéterminé, et dans lequel, à l'étape d'élaboration, la signature vocale d'identification est élaborée en fonction également dudit signal d'extension.

Le signal vocal d'enregistrement permet au locuteur de s'enregistrer sur l'application informatique. Ce signal est mixé avec un signal d'extension puis est traité afin d'en déduire une signature vocale d'enregistrement.

Au cours du procédé d'identification, le locuteur émet à nouveau un signal vocal d'identification, qui est mixé avec le même signal d'extension puis est traité afin d'en déduire une signature vocale d'identification.

Cette signature vocale d'identification va alors être comparée à toutes les signatures vocales d'enregistrement stockées dans la mémoire de l'application, de façon à pouvoir trouver qui est le locuteur.

Ainsi, on compare des signatures vocales enrichies grâce au signal d'extension.

En d'autres termes, grâce à l'invention, le signal vocal utilisé peut être une courte locution dans la mesure où il est ensuite rallongé au moyen du signal d'extension, ce qui permet d'en faire une locution plus longue, assurant une meilleure reconnaissance du locuteur parmi les locuteurs enregistrés dans le système.

Un avantage de cette solution est qu'elle est indolore pour l'usager, puisque ce dernier procède comme auparavant en se contentant d'énoncer une courte locution.

Un autre avantage de cette solution est qu'elle permet d'assurer une meilleure sécurité informatique. En effet, si un pirate informatique parvient à se procurer un enregistrement de la voix d'un usager enregistré, il ne pourra rien en faire puisqu'il ne connait pas les signaux d'extension qu'il faudrait ajouter au signal vocal pour réussir l'identification.

Encore un autre avantage est que cette solution assure une meilleure robustesse aux bruits parasites extérieurs, puisque les signaux d'extension ajoutés ne sont pas bruités et abaissent donc le niveau de bruit global du signal complet servant à l'identification.

D'autres caractéristiques avantageuses et non limitatives du procédé d'identification conforme à l'invention, prises individuellement ou selon toutes les combinaisons techniquement possibles, sont les suivantes :

- la mémoire informatique comporte une pluralité de signatures vocales de référence respectivement associées à une pluralité de locuteurs dudit ensemble, le signal d'extension étant associé à un des locuteurs et étant différent des signaux d'extension associés aux autres locuteurs, ladite mémoire stockant chaque signal d'extension de manière associée à un des locuteurs ;
- à l'étape de génération, le calculateur génère au moins autant de signaux complets qu'il y a de locuteurs dans ledit ensemble, chaque signal complet comprenant ledit signal vocal d'identification et un desdits signaux d'extension enregistrés dans ladite mémoire ;
- à l'étape d'élaboration, le calculateur élabore une signature vocale d'identification pour chaque signal complet ;
- à l'étape de comparaison, le calculateur compare chaque signature vocale d'identification avec chaque signature vocale de référence enregistrée dans la mémoire afin d'en déduire un score ;
- à l'étape d'identification, le locuteur particulier est identifié compte tenu des scores déduits ;
- le signal complet est élaboré en apposant le signal d'extension avant et/ou après ledit signal vocal d'identification ;
- le signal d'extension est une fonction d'une somme d'au moins une sinusoïde de fréquence comprise entre 50 et 650 Hz, et de préférence entre 100 et 500 Hz ;
- le signal d'extension est issu du produit d'une fonction paramétrable et d'une fonction fenêtre d'observation, ladite fonction paramétrable étant préférentiellement modulée en amplitude et/ou en fréquence ;
- l'amplitude maximum du signal d'extension est inférieure ou égale à l'amplitude maximum du signal vocal d'identification, et est de préférence inférieure ou égale à 80% de l'amplitude maximum du signal vocal d'identification ;
- la durée maximum dudit au moins un signal d'extension est inférieure ou égale au tiers de la durée totale du signal complet, et est de préférence égale à 20% de la durée totale du signal complet ;
- le signal vocal d'identification comporte un nombre de syllabes inférieur ou égal à quatre.

L'invention porte également sur un procédé d'enregistrement d'un locuteur particulier au moyen d'un calculateur qui comporte une mémoire informatique, le procédé comprenant des étapes de :

- acquisition d'un signal vocal d'enregistrement émis par le locuteur particulier,
- détermination d'un signal d'extension,
- génération d'un signal complet d'enregistrement qui comprend ledit signal vocal d'enregistrement et le signal d'extension,
- détermination d'une signature vocale de référence en fonction du signal complet d'enregistrement, et
- stockage de ladite signature vocale de référence dans ladite mémoire de façon associée avec le locuteur particulier.

L'invention concerne aussi un véhicule automobile comprenant un habitacle, des moyens d'acquisition d'un signal vocal émis par un locuteur particulier situé dans l'habitacle, et une unité de calcul programmé pour mettre en oeuvre l'un et/ou l'autre des procédés précités.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

La description qui va suivre en regard des dessins annexés, donnés à titre d'exemples non limitatifs, fera bien comprendre en quoi consiste l'invention et comment elle peut être réalisée.

Sur les dessins annexés :

La figure 1 est un graphique illustrant une fonction paramétrable utilisable dans le cadre d'un procédé conforme à l'invention ;

La figure 2 est un graphique illustrant une fonction fenêtre d'observation utilisable dans le cadre du procédé conforme à l'invention ;

La figure 3 est un graphique illustrant une fonction d'extension utilisable dans le cadre du procédé conforme à l'invention ;

La figure 4 est un graphique illustrant un signal complet comprenant la fonction d'extension de la figure 3 ;

La figure 5 est un diagramme illustrant un mode de mise en oeuvre d'un procédé d'identification conforme à l'invention.

L'invention peut être mise en oeuvre sur tout type d'appareil.

Dans l'exemple qui sera ici décrit, elle sera mise en oeuvre dans un véhicule automobile, et plus précisément dans une voiture pouvant accueillir plusieurs usagers (un conducteur et des passagers).

Ce véhicule automobile se présentera sous une forme classique.

Il comporte ainsi un châssis qui délimite un habitacle pour les usagers.

Il comporte également des moyens d'acquisition de signaux vocaux. Ces moyens d'acquisition se présentent par exemple sous la forme de microphones disposés dans le véhicule automobile de façon à pouvoir enregistrer les locutions émises par les différents passagers du véhicule automobile.

Le véhicule automobile comporte également un calculateur qui est connecté aux microphones et qui forme un système de traitement d'informations programmé de manière particulière pour mettre en oeuvre l'invention.

Le calculateur comporte plus précisément au moins un processeur, une mémoire, différentes interfaces d'entrée et de sortie, ainsi qu'une interface homme-machine. Grâce à sa mémoire, le calculateur mémorise une application informatique, constituée de programmes d'ordinateur comprenant des instructions dont l'exécution par le processeur permet la mise en oeuvre par le calculateur des procédés décrits ci-après.

Grâce à ses interfaces d'entrée, le calculateur peut lire les données acquises par les microphones.

Grâce à ses interfaces de sortie, le calculateur peut commander la mise en oeuvre de certaines fonctions du véhicule automobile, telles que par exemple l'ouverture des fenêtres ou le démarrage du moteur.

L'interface Homme-Machine peut se présenter sous diverses formes. On considérera ici qu'elle comporte un écran tactile et des enceintes situés dans l'habitacle du véhicule.

Comme cela sera bien décrit dans la suite de cet exposé, l'invention porte principalement sur l'identification d'un locuteur sur la base d'une locution émise vocalement par ce dernier.

On entend ici par « locution » un groupe de mots constituant un syntagme figé. Il s'agit en pratique de mots clefs prédéfinis.

Dans l'exemple qui sera considéré, le locuteur sera le conducteur du véhicule, mais il pourrait en variante s'agir de n'importe quel autre passager.

Selon la présente invention, l'identification du locuteur est possible seulement si ce dernier s'est enregistré au préalable auprès du système de traitement d'informations.

Le processus d'identification du locuteur consiste en effet à déterminer, parmi un ensemble d'usagers du véhicule qui se sont au préalable enregistrés, celui qui émet la locution.

Dans une première partie de cet exposé, on décrira donc la manière selon laquelle le conducteur peut s'enregistrer auprès du système. La seconde partie de l'exposé portera quant à elle sur l'identification proprement dite du conducteur.

La procédure d'enregistrement est réalisée en plusieurs étapes successives. Elle vise à permettre de générer une signature vocale associée au locuteur.

La première étape consiste ici pour le conducteur à initier la procédure en sélectionnant un menu correspondant dans l'application informatique, au moyen de l'écran tactile.

Une fois la procédure initiée, le calculateur génère une requête au moyen de l'interface Homme-Machine, qui consiste à demander au conducteur de prononcer ou même préférentiellement de répéter plusieurs fois une même locution prédéterm inée.

Cette locution est préférentiellement choisie lors de la conception de l'application informatique de façon à répondre à deux critères.

Le premier critère est un critère de compréhension.

Pour que le calculateur soit en mesure de détecter chaque moment où le conducteur prononcera cette locution, cette dernière doit être voisée. En d'autres termes, elle doit comporter des intonations à basses fréquences. On la choisira donc de manière à ce qu'elle comporte autant de voyelles que possible.

Le second critère est un critère de temps.

La locution doit en effet être rapide à énoncer de façon que le conducteur puisse la dire facilement et rapidement, sans que cela ne devienne fastidieux pour lui. Ce critère est rempli lorsque la locution comporte trois ou quatre syllabes. De cette façon, la locution peut être énoncée en une durée inférieure à la seconde.

La locution ici choisie est « Hello Renault ».

Lors de la procédure d'enregistrement, le calculateur enregistre un long signal vocal, qui est ensuite découpé en trois signaux vocaux correspondant aux trois moments où la locution a été énoncée. Ces trois signaux vocaux sont ensuite combinés en un seul signal vocal d'enregistrement $S4_1$, dont on considère qu'il forme un exemple caractéristique d'énonciation de la locution par le conducteur. Le calculateur peut déduire de ce signal vocal d'enregistrement $S4_1$ une

signature vocale de base, en utilisant un processus de traitement classique et bien connu de l'homme de l'art, qui sera ci-après appelé « processus de génération d'empreinte acoustique ».

On peut décrire succinctement ce processus de la façon suivante.

Il comporte tout d'abord une analyse acoustique qui consiste à extraire du signal vocal d'enregistrement des informations pertinentes et caractéristiques. Pour cela, des jeux de coefficients acoustiques sont calculés à intervalles de temps réguliers (c'est-à-dire pour des fenêtres d'observations successives), sur des blocs de signal de longueur fixe. Ces jeux de coefficients constituent ensemble une matrice acoustique qui forme une signature numérique caractéristique de la voix du conducteur.

Chaque jeu de coefficient est par exemple calculé en utilisant des transformées de Cosinus Discret du logarithme de la densité spectrale d'énergie du signal. Les coefficients cepstraux issus d'une telle analyse caractérisent en effet bien la forme du spectre.

En l'espèce, les coefficients cepstraux utilisés sont les MFCC (« de l'anglais « Mel Frequency Cepstral Coefficients). Ils présentent en effet l'avantage d'être peu corrélés entre eux.

Le processus est en outre ici complété par un filtrage de type « mel-filterbank », ce qui permet de privilégier la richesse des sons voisés.

Le processus de génération d'empreinte acoustique permet ainsi de générer, en fonction du signal vocal d'enregistrement S4$_1$, une signature vocale de base caractéristique de la voix du conducteur.

Une fois cette signature vocale de base obtenue, selon l'invention, le calculateur va chercher à calculer une autre signature vocale dite étendue.

L'idée est que la seule locution « Hello Renault » est trop courte pour permettre d'identifier de façon robuste le locuteur parmi plusieurs locuteurs enregistrés en utilisant seulement sa signature vocale de base. C'est notamment le cas lorsque le conducteur est affecté par un état pathologique particulier (maladie, émotion, fatigue...), lorsque les conditions de prise de son ne sont pas bonnes (bruit ambiant...), ou lorsque le conducteur a prononcé la locution de manière peu compréhensible (mot tronqué...).

Pour obtenir la signature vocale étendue, le calculateur détermine tout d'abord un signal d'extension.

Ce signal d'extension est destiné à être accolé au signal vocal enregistré, afin de le prolonger, de façon à pouvoir obtenir un signal complet qui pourra être traité au moyen du processus de génération d'empreinte acoustique afin de générer la signature vocale étendue.

Le signal d'extension est associé au conducteur. Il est donc choisi de façon à être différent des signaux d'extension déjà utilisés pour les autres locuteurs enregistrés dans le système.

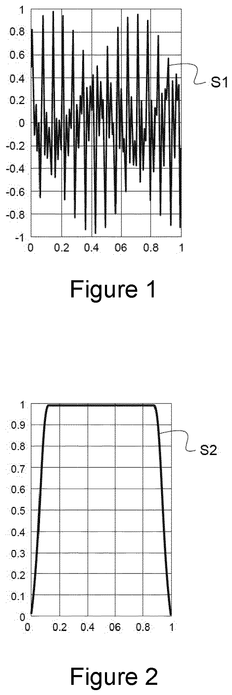

Ce signal d'extension est issu d'une fonction paramétrable S1(t), dont un exemple est illustré sur la figure 1.

Cette fonction paramétrable S1(t) est de préférence une somme d'au moins une sinusoïde de fréquence comprise entre 100 et 500 Hz.

Dans le mode de réalisation ici décrit, cette fonction paramétrable S1(t) s'exprime sous la forme suivante :

$$S1(t) = \sum_{i=1}^{M} A_i . \sin\left(2.\pi.f_i.t + \varphi_i\right)$$

Dans cette équation, les paramètres réglables sont :

- M : le nombre de sinusoïdes,
- $A_i$ : l'amplitude de chaque sinusoïde,
- $f_i$ : la fréquence de chaque sinusoïde, et
- $\varphi_i$ : la phase de chaque sinusoïde.

Cette fonction est de préférence modulée en amplitude ($A_i$ étant alors une fonction du temps t) et/ou en fréquence ($f_i$ étant alors une fonction du temps t).

Le jeu de paramètres choisis pour créer le signal d'extension est sélectionné de telle sorte que les signaux d'extension associés aux différents locuteurs soient bien distincts les uns des autres.

On pourra considérer que deux signaux d'extension sont distincts l'un de l'autre en fréquence lorsqu'au moins un pas de 20 Hz sépare chacune de deux fréquences. On pourra considérer que deux signaux d'extension sont distincts l'un de l'autre en phase lorsqu'au moins un pas de $\pi$ /4 radian sépare chacune de deux phases. On pourra considérer les amplitudes proches de l'unité afin de maximiser la présence fréquentielle (énergie) du signal d'extension.

Ces jeux de paramètres pourront être choisis aléatoirement par le calculateur, auquel cas ce dernier vérifiera ensuite qu'ils satisfont bien les conditions de distinction précitées.

En variante, des jeux de paramètres pourront être prédéterminés et enregistrés dans la mémoire du calculateur, auquel cas le calculateur pourra, à chaque enregistrement d'un nouveau locuteur, aller chercher dans sa mémoire un nouveau jeu de paramètres non encore utilisé.

Dans l'exemple illustré sur la figure 1, le jeu de paramètres suivant a été utilisé :

$M=3$

$(A_1, f_1, \varphi_1) = (1, 127, 0)$

$(A_2, f_2, \varphi_2) = (1, 241, 0)$

$(A_3, f_3, \varphi_3) = (1, 353, 0)$

La fonction paramétrable S1(t) obtenue est ensuite modifiée de façon qu'une fois accolée au signal vocal d'enregistrement $S4_1$, il n'apparaisse pas de discontinuité au niveau de la jonction entre les courbes.

Pour cela, il est prévu de calculer le produit de cette fonction paramétrable S1(t) avec une fonction fenêtre d'observation (S2(t)) prédéterminée et illustrée sur la figure 2.

La fonction fenêtre d'observation (S2(t)) est ici une fonction d'apodisation. Elle permet de s'assurer que le produit de la fonction paramétrable S1(t) avec la fonction fenêtre d'observation (S2(t)) prenne la valeur nulle au début et à la fin de la fenêtre de temps considérée.

Dans l'exemple ici décrit, l'équation de la fonction fenêtre d'observation (S2(t)) est la suivante.

$$S2(t) = \begin{cases} \frac{1}{2} \cdot \left(1 + \cos\left(\frac{2.\pi}{r} \cdot \left(x - \frac{r}{2}\right)\right)\right) & si\ x \in \left[0; \frac{r}{2}\right[ \\ 1 & si\ x \in \left[\frac{r}{2}; 1 - \frac{r}{2}\right[ \\ \frac{1}{2} \cdot \left(1 + \cos\left(\frac{2.\pi}{r} \cdot \left(x - 1 + \frac{r}{2}\right)\right)\right) & si\ x \in \left[1 - \frac{r}{2}; 1\right[ \end{cases}$$

Dans cette équation :

- x est la durée de temps normalisée par rapport à la durée de la fenêtre de temps considérée, et
- r est un coefficient de pondération en cosinus, ici choisi égale à 0,25.

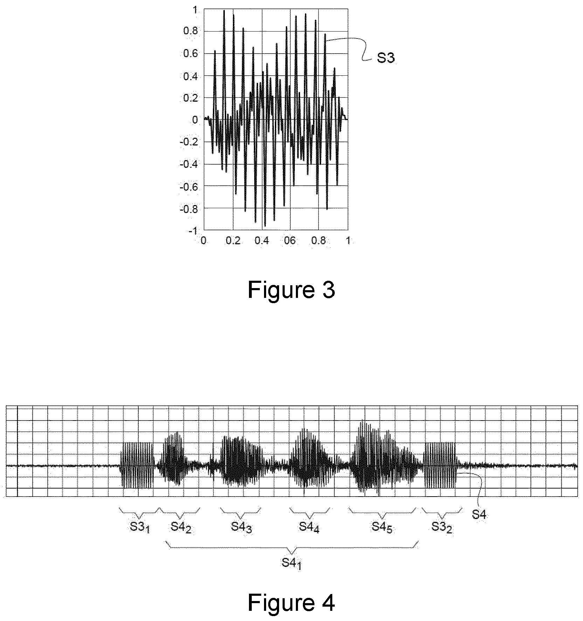

Le signal d'extension S3 est alors choisi égal au produit du signal paramétrable S1 et de cette fonction fenêtre d'observation S2. Il est représenté sur la figure 3.

A ce stade, on notera que le signal d'extension S3 est paramétré de façon que son amplitude maximum soit inférieure ou égale à 80% de l'amplitude maximum du signal vocal enregistré, et que la durée totale du ou des signaux d'extension accolé(s) au signal vocal d'enregistrement $S4_1$ ne dépasse pas 20% de la durée totale du signal complet.

Ce signal complet est ensuite obtenu en accolant le signal d'extension S3 au début et/ou à la fin du signal vocal enregistré. Il est ici accolé au début et à la fin du signal vocal.

Le signal complet S4 ainsi obtenu est représenté sur la figure 4. On y observe qu'il comporte deux signaux $S3_1$, $S3_2$ identiques qui encadrent le signal vocal d'enregistrement $S4_1$, et qui correspondent au signal d'extension S3.

On y observe également que le signal vocal d'enregistrement $S4_1$ comporte quatre parties $S4_2$, $S4_3$, $S4_4$, $S4_5$ qui correspondent aux quatre syllabes de la locution « Hello Renault ».

A ce stade, le signal complet S4 est traité au moyen du processus de génération d'empreinte acoustique, de manière à obtenir la signature vocale étendue.

Cette signature vocale étendue, la signature vocale de base et le signal d'extension S3 utilisé sont ensuite stockés dans la mémoire informatique du calculateur, de façon associée au conducteur.

Cette association peut prendre différentes formes.

Ainsi, ces différents éléments peuvent simplement être mémorisés dans un enregistrement qui stocke des droits d'accès du conducteur (droit d'ouvrir les fenêtres, droit de demander le démarrage du moteur...).

Ici, on considérera plutôt que la signature vocale de base, la signature vocale étendue et le signal d'extension S3 sont enregistrés dans trois champs d'un enregistrement d'une base de données. Cet enregistrement comporte en outre un quatrième champ qui stocke le nom du conducteur (saisi au préalable sur l'écran tactile) et un cinquième champ qui stocke les droits d'accès du conducteur (choisis par ce dernier dans un menu affiché sur l'écran tactile). Toute autre variante est également envisageable.

Quoiqu'il en soit, à l'issue de plusieurs procédures d'enregistrement successives, le calculateur mémorise un ensemble fermé de N triplets de signatures vocales (chaque triplet comprenant une signature vocale de base, une signature vocale étendue associées à l'un des N locuteurs enregistrés et un signal d'extension S3 associé). Une signature vocale étendue stockée dans la mémoire informatique à l'issue d'une procédure d'enregistrement est dite signature vocale de référence. Une signature vocale de base stockée dans la mémoire informatique à l'issue d'une procédure d'enregistrement est dite signature vocale de référence. Alternativement, dans le but de gagner de la place dans la mémoire informatique du calculateur, il est possible de stocker une signature vocale de base et des paramètres permettant de reconstruire une signature vocale étendue.

On peut maintenant décrire comment le procédé d'identification du conducteur est mis en oeuvre.

Pour cela, on peut décrire deux modes de réalisation différents.

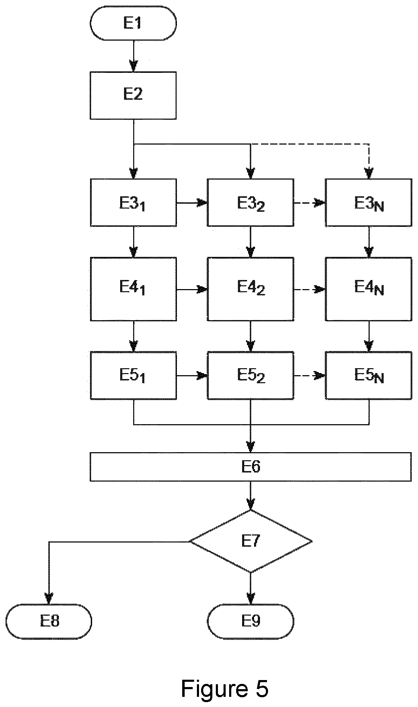

Le premier mode de réalisation est illustré sur la figure 5.

Dès que les portes du véhicule automobile sont déverrouillées, le calculateur est alimenté en courant et il se met dans un état de veille (étape E1). Dans cet état, il se contente de traiter les données reçues des microphones.

Ainsi, lorsqu'au cours d'une étape E2 d'initiation du procédé d'identification, le conducteur formule oralement la locution convenue (ici « Hello Renault »), le calculateur peut détecter cette locution. Il enregistre alors dans sa mémoire le nouveau signal vocal capté par les microphones et contenant cette locution. Ce nouveau signal vocal est un signal vocal d'identification.

La longueur de ce nouveau signal vocal est ajustée à la durée de formulation de la locution.

Au cours d'une étape $E3_1$, le calculateur accole le nouveau signal vocal avec le premier des N signaux d'extension enregistrés dans sa mémoire, à savoir celui qui est associé au premier locuteur qui s'est enregistré et qui est stocké dans le premier enregistrement de sa base de données. Cette opération est réalisée de la même façon que pendant la procédure d'enregistrement, ici en apposant le signal d'extension avant et après le nouveau signal vocal.

Puis, au cours d'une étape $E4_1$, le calculateur détermine une nouvelle signature vocale étendue. Cette nouvelle signature vocale étendue est une signature vocale d'identification. Il se base pour cela sur le signal complet obtenu à l'étape $E3_1$, en lui appliquant le processus de génération d'empreinte acoustique.

Enfin, au cours d'une étape $E5_1$, le calculateur compare cette signature vocale étendue avec la signature vocale étendue qui est stockée dans le premier enregistrement de sa base de données. Autrement dit, le calculateur compare la signature vocale d'identification avec la signature vocale de référence.

Cette étape de comparaison est réalisée de façon connue en soi, en comparant les jeux de coefficients acoustiques de ces deux signatures. Cette comparaison permet de déterminer un score, qui est ici d'autant plus élevé que les jeux de coefficients acoustiques de ces deux signatures sont proches.

Ces trois étapes $E3_1$, $E4_1$, $E5_1$ sont ici répétées N fois (voir les étapes $E3_2 E3_N$, $E4_2 E4_N$, $E5_2 E5_N$, sur la figure 5), en exploitant les données mémorisées dans les N enregistrements de la base de données associés aux N locuteurs enregistrés. Le calculateur obtient ainsi autant de scores qu'il y a de locuteurs enregistrés dans sa mémoire.

Une fois ces scores calculés, au cours d'une étape E6, le calculateur compare l'ensemble de ces scores et sélectionne le plus élevé. Ce score maximum est associé à l'un des locuteurs enregistrés, ci-après appelé locuteur sélectionné.

A ce stade, le calculateur pourrait conclure que le conducteur correspond au locuteur sélectionné.

Toutefois, pour plus de sécurité, au cours d'une étape E7, le calculateur compare ce score maximum avec un seuil prédéterminé.

Si ce score maximum est inférieur au seuil prédéterminé, au cours d'une étape E8, le calculateur affiche sur l'écran tactile ou émet sur les enceintes un message signifiant au conducteur qu'il n'a pas été reconnu. En effet, ce score est considéré comme insuffisant pour reconnaître avec une fiabilité suffisante si le locuteur sélectionné correspond bien au conducteur. Dans cette éventualité, il est proposé au conducteur soit de s'enregistrer, soit de reformuler la locution.

Dans le cas contraire, au cours d'une étape E9, le calculateur considère que le score maximum est suffisamment élevé pour considérer avec une fiabilité suffisante que le locuteur sélectionné correspond bien au conducteur. Dans cette éventualité, le conducteur est bien reconnu. Il peut alors ensuite émettre des instructions, telle que la commande de l'ouverture des fenêtres ou le démarrage du moteur. Ces instructions seront alors suivies des faits à condition que les droits d'accès du conducteur le permettent.

On peut maintenant décrire le second mode de réalisation du procédé d'identification.

Dans ce second mode, les étapes E1 et E2 sont identiques à celles précitées et décrites en référence à la figure 5.

A l'issue de l'étape E2, il est toutefois prévu que le calculateur procède au calcul d'une signature vocale de base, compte tenu du nouveau signal vocal venant d'être émis par le conducteur. Cette signature vocale de base est une signature vocale de base d'identification

Puis le calculateur compare cette signature vocale de base d'identification avec chacune des signatures vocales de base de référence enregistrées dans la mémoire du calculateur. Il procède pour cela de la même façon que précité, ce qui lui permet d'obtenir N scores.

Puis si le score maximum obtenu est supérieur à un premier seuil prédéterminé, le calculateur peut considérer que le conducteur est reconnu (étape E9).

En revanche, si le score maximum est inférieur à un second seuil prédéterminé, le calculateur peut considérer que le conducteur n'est pas reconnu et qu'il ne pourra pas l'être (étape E8).

Si le score maximum est compris entre ces deux seuils, le calculateur peut tenter de reconnaître le conducteur en procédant alors comme dans le premier mode de réalisation, en se basant non plus sur les signaux vocaux de base mais plutôt sur les signaux vocaux étendus. Pour cela, il peut mettre en oeuvre les étapes $E3_1$ et suivantes du premier mode de réalisation décrit.

La présente invention n'est nullement limitée aux modes de réalisation décrits et représentés, mais l'homme du métier saura y apporter toute variante conforme à l'invention.

En particulier, on pourrait prévoir que la signature associée à un locuteur soit formée non pas par un jeu de coefficients acoustiques, comme cela a été décrit supra, mais par tout autre élément. A titre d'exemple, la signature vocale d'un locuteur pourra être formée par le signal vocal d'enregistrement lui-même (par le signal brut ou par un signal éventuellement retravaillé, par exemple pour supprimer les bruits parasites).

Encore en variante, le signal d'extension pourra ne pas être accolé directement au début ou à la fin du signal vocal enregistré par les microphones, mais on pourra prévoir de laisser un laps de temps vide entre le signal d'extension et le signal vocal. On notera que de préférence, ces deux signaux ne se recouvriront pas, en tout ou partie, puisque cela aurait pour conséquence de réduire la fiabilité des résultats.

Encore en variante, les signaux d'extension utilisés pour les différents locuteurs enregistrés dans la base de données pourraient être les mêmes, mais cela aurait pour conséquence ici encore de réduire la fiabilité des résultats.

**Revendications**

1. Procédé d'identification d'un locuteur particulier parmi un ensemble de locuteurs, au moyen d'un calculateur qui comporte une mémoire informatique dans laquelle est enregistrée au moins une signature vocale de référence associée à un des locuteurs dudit ensemble, le procédé comprenant des étapes de :

   - acquisition d'un signal vocal d'identification ($S4_1$) émis par le locuteur particulier,
   - élaboration d'une signature vocale d'identification en fonction dudit signal vocal d'identification ($S4_1$),
   - comparaison de ladite signature vocale d'identification avec l'au moins une signature vocale de référence enregistrée dans la mémoire informatique, et
   - identification du locuteur particulier en fonction du résultat de ladite comparaison,
   **caractérisé en ce que** l'au moins une signature vocale de référence enregistrée dans la mémoire informatique a été déterminée en fonction d'un signal vocal d'enregistrement et d'un signal d'extension ($S3_1$, $S3_2$) prédéterminé,
   **en ce qu'**il est prévu, avant l'étape d'élaboration, une étape de génération d'un signal complet (S4) qui comprend ledit signal vocal d'identification ($S4_1$) et ledit signal d'extension ($S3_1$, $S3_2$) prédéterminé, et
   **en ce que**, à l'étape d'élaboration, la signature vocale d'identification est élaborée en fonction également dudit signal d'extension ($S3_1$, $S3_2$).

2. Procédé d'identification selon la revendication précédente, dans lequel la mémoire informatique comporte une pluralité de signatures vocales de référence respectivement associées à une pluralité de locuteurs dudit ensemble, le signal d'extension ($S3_1$, $S3_2$) étant associé à un des locuteurs et étant différent des signaux d'extension associés aux autres locuteurs, ladite mémoire stockant chaque signal d'extension de manière associée à un des locuteurs .

3. Procédé d'identification selon la revendication précédente, dans lequel :

   - à l'étape de génération, le calculateur génère au moins autant de signaux complets (S4) qu'il y a de locuteurs dans ledit ensemble, chaque signal complet (S4) comprenant ledit signal vocal d'identification ($S4_1$) et un desdits signaux d'extension ($S3_1$, $S3_2$) enregistrés dans ladite mémoire,
   - à l'étape d'élaboration, le calculateur élabore une signature vocale d'identification pour chaque signal complet (S4),
   - à l'étape de comparaison, le calculateur compare chaque signature vocale d'identification avec chaque signature vocale de référence enregistrée dans la mémoire afin d'en déduire un score, et
   - à l'étape d'identification, le locuteur particulier est identifié compte tenu des scores déduits.

4. Procédé d'identification selon l'une des revendications précédentes, dans lequel le signal complet (S4) est élaboré en apposant le signal d'extension ($S3_1$, $S3_2$) avant et/ou après ledit signal vocal d'identification($S4_1$).

5. Procédé d'identification selon l'une des revendications précédentes, dans lequel le signal d'extension ($S3_1$, $S3_2$)

est une fonction d'une somme d'au moins une sinusoïde de fréquence comprise entre 50 et 650 Hz, et de préférence entre 100 et 500 Hz.

6. Procédé d'identification selon l'une des revendications précédentes, dans lequel le signal d'extension ($S3_1$, $S3_2$) est issu du produit d'une fonction paramétrable (S1) et d'une fonction fenêtre d'observation (S2), ladite fonction paramétrable (S1) étant préférentiellement modulée en amplitude et/ou en fréquence.

7. Procédé d'identification selon l'une des revendications précédentes, dans lequel :

    - l'amplitude maximum du signal d'extension ($S3_1$, $S3_2$) est inférieure ou égale à l'amplitude maximum du signal vocal d'identification ($S4_1$), et est de préférence inférieure ou égale à 80% de l'amplitude maximum du signal vocal d'identification ($S4_1$), et/ou
    - la durée maximum dudit au moins un signal d'extension ($S3_1$, $S3_2$) est inférieure ou égale au tiers de la durée totale du signal complet (S4), et est de préférence égale à 20% de la durée totale du signal complet (S4).

8. Procédé d'identification selon l'une des revendications précédentes, dans lequel le signal vocal d'identification ($S4_1$) comporte un nombre de syllabes inférieur ou égal à quatre.

9. Procédé d'enregistrement d'un locuteur particulier au moyen d'un calculateur qui comporte une mémoire informatique, le procédé comprenant des étapes de :

    - acquisition d'un signal vocal d'enregistrement émis par le locuteur particulier,
    - détermination d'un signal d'extension,
    - génération d'un signal complet d'enregistrement qui comprend ledit signal vocal d'enregistrement et le signal d'extension,
    - détermination d'une signature vocale de référence en fonction du signal complet d'enregistrement, et
    - stockage de ladite signature vocale de référence dans ladite mémoire de façon associée avec le locuteur particulier.

10. Véhicule automobile comprenant un habitacle, des moyens d'acquisition d'un signal vocal émis par un locuteur particulier situé dans l'habitacle, et une unité de calcul programmé pour mettre en oeuvre un procédé conforme à l'une des revendications précédentes.

**Patentansprüche**

1. Verfahren zur Identifizierung eines bestimmten Sprechers aus einer Menge von Sprechern mittels eines Rechners, der einen Computerspeicher beinhaltet, in dem wenigstens eine Referenzsprachsignatur gespeichert ist, die einem der Sprecher der Menge zugeordnet ist, wobei das Verfahren Folgende Schritte umfasst:

    - Erfassen eines Identifizierungssprachsignals ($S4_1$), das von dem bestimmten Sprecher abgegeben wird,
    - Erstellen einer Identifizierungssprachsignatur in Abhängigkeit von dem Identifizierungssprachsignal ($S4_1$),
    - Vergleichen der Identifizierungssprachsignatur mit der wenigstens einen Referenzsprachsignatur, die in dem Computerspeicher gespeichert ist, und
    - Identifizieren des bestimmten Sprechers in Abhängigkeit vom Ergebnis des Vergleichs,
    **dadurch gekennzeichnet, dass** die wenigstens eine Referenzsprachsignatur, die in dem Computerspeicher gespeichert ist, in Abhängigkeit von einem Aufnahmesprachsignal und einem vorbestimmten Erweiterungssignal ($S3_1$, $S3_2$) bestimmt wurde,
    dadurch, dass vor dem Schritt des Erstellens ein Schritt des Erzeugens eines vollständigen Signals (S4) vorgesehen ist, das das Identifizierungssprachsignal ($S4_1$) und das vorbestimmte Erweiterungssignal ($S3_1$, $S3_2$) umfasst, und
    dadurch, dass beim Schritt des Erstellens die Identifizierungssprachsignatur ebenfalls in Abhängigkeit von dem Erweiterungssignal ($S3_1$, $S3_2$) erstellt wird.

2. Identifizierungsverfahren nach dem vorhergehenden Anspruch, wobei der Computerspeicher eine Mehrzahl von Referenzsprachsignaturen beinhaltet, die jeweils einer Mehrzahl von Sprechern der Menge zugeordnet sind, wobei das Erweiterungssignal ($S3_1$, $S3_2$) einem der Sprecher zugeordnet ist und sich von den Erweiterungssignalen unterscheidet, die den anderen Sprechern zugeordnet sind, wobei der Speicher jedes Erweiterungssignal so speichert, dass es einem der Sprecher zugeordnet ist.

3. Identifizierungsverfahren nach dem vorhergehenden Anspruch, wobei:

- beim Schritt des Erzeugens der Rechner wenigstens so viele vollständige Signale (S4) erzeugt wie Sprecher in der Menge vorhanden sind, wobei jedes vollständige Signal (S4) das Identifizierungssprachsignal ($S4_1$) und eins der Erweiterungssignale ($S3_1$, $S3_2$), die im Speicher gespeichert sind, umfasst,
- beim Schritt des Erstellens der Rechner eine Identifizierungssprachsignatur für jedes vollständige Signal (S4) erstellt,
- beim Schritt des Vergleichens der Rechner jede Identifizierungssprachsignatur mit jeder Referenzsprachsignatur vergleicht, die im Speicher gespeichert ist, um daraus einen Score abzuleiten, und
- beim Schritt des Identifizierens der bestimmte Sprecher unter Berücksichtigung der abgeleiteten Scores identifiziert wird.

4. Identifizierungsverfahren nach einem der vorhergehenden Ansprüche, wobei das vollständige Signal (S4) durch Einfügung des Erweiterungssignals ($S3_1$, $S3_2$) vor und/oder nach dem Identifizierungssprachsignal ($S4_1$) erstellt wird.

5. Identifizierungsverfahren nach einem der vorhergehenden Ansprüche, wobei das Erweiterungssignal ($S3_1$, $S3_2$) eine Funktion einer Summe wenigstens einer Sinusform mit einer Frequenz zwischen 50 und 650 Hz und vorzugsweise zwischen 100 und 500 Hz ist.

6. Identifizierungsverfahren nach einem der vorhergehenden Ansprüche, wobei das Erweiterungssignal ($S3_1$, $S3_2$) aus dem Produkt einer parametrierbaren Funktion (S1) und einer Beobachtungsfensterfunktion (S2) hervorgeht, wobei die parametrierbare Funktion (S1) vorzugsweise frequenz- und/oder amplitudenmoduliert ist.

7. Identifizierungsverfahren nach einem der vorhergehenden Ansprüche, wobei:

- die maximale Amplitude des Erweiterungssignals ($S3_1$, $S3_2$) kleiner als oder gleich der maximalen Amplitude des Identifizierungssprachsignals ($S4_1$) und vorzugsweise kleiner als oder gleich 80 % der maximalen Amplitude des Identifizierungssprachsignals ($S4_1$) ist, und/oder
- die maximale Dauer des wenigstens einen Erweiterungssignals ($S3_1$, $S3_2$) kleiner als oder gleich dem Drittel der Gesamtdauer des vollständigen Signals (S4) und vorzugsweise gleich 20 % der Gesamtdauer des vollständigen Signals (S4) ist.

8. Identifizierungsverfahren nach einem der vorhergehenden Ansprüche, wobei das Identifizierungssprachsignal ($S4_1$) eine Anzahl von Silben kleiner als oder gleich vier beinhaltet.

9. Verfahren zur Aufnahme für einen bestimmten Sprecher mittels eines Rechners, der einen Computerspeicher beinhaltet, wobei das Verfahren die folgenden Schritte umfasst:

- Erfassen eines Aufnahmesprachsignals, das von dem bestimmten Sprecher abgegeben wird,
- Bestimmen eines Erweiterungssignals,
- Erzeugen eines vollständigen Aufnahmesignals, das das Aufnahmesprachsignal und das Erweiterungssignal umfasst,
- Bestimmen einer Referenzsprachsignatur in Abhängigkeit von dem vollständigen Aufnahmesignal, und
- Speichern der Referenzsprachsignatur in dem Speicher auf eine dem bestimmten Sprecher zugeordnete Weise.

10. Kraftfahrzeug umfassend einen Fahrzeuginnenraum, Mittel zur Erfassung eines Sprachsignals, das von einem bestimmten Sprecher abgegeben wird, der sich im Fahrzeuginnenraum befindet, und eine Recheneinheit, die dafür programmiert ist, ein Verfahren nach einem der vorhergehenden Ansprüche durchzuführen.

**Claims**

1. Method for identifying a particular speaker from among a set of speakers, by means of a computer which comprises a computer memory in which at least one reference voice signature associated with one of the speakers in said set is recorded, the method comprising steps of:

- acquiring an identifying voice signal ($S4_1$) produced by the particular speaker,
- constructing an identifying voice signature in accordance with said identifying voice signal ($S4_1$),
- comparing said identifying voice signature with the at least one reference voice signature recorded in the computer memory, and
- identifying the particular speaker in accordance with the result of said comparison,
**characterized in that** the at least one reference voice signature recorded in the computer memory was determined in accordance with a recorded voice signal and with a predetermined extension signal ($S3_1$, $S3_2$) ,
**in that** provision is made, before the construction step, for a step of generating a complete signal ($S4$) which comprises said identifying voice signal ($S4_1$) and said predetermined extension signal ($S3_1$, $S3_2$), and
**in that**, in the construction step, the identifying voice signature is constructed in accordance also with said extension signal ($S3_1$, $S3_2$) .

2. Identification method according to the preceding claim, in which the computer memory comprises a plurality of reference voice signatures which are associated, respectively, with a plurality of speakers in said set, the extension signal ($S3_1$, $S3_2$) being associated with one of the speakers and being different from the extension signals associated with the other speakers, said memory storing each extension signal so as to be associated with one of the speakers.

3. Identification method according to the preceding claim, in which:

- in the generation step, the computer generates at least as many complete signals ($S4$) as there are speakers in said set, each complete signal ($S4$) comprising said identifying voice signal ($S4_1$) and one of said extension signals ($S3_1$, $S3_2$) recorded in said memory,
- in the construction step, the computer constructs an identifying voice signature for each complete signal ($S4$),
- in the comparison step, the computer compares each identifying voice signature with each reference voice signature recorded in the memory in order to deduce a score therefrom, and
- in the identification step, the particular speaker is identified taking into account the deduced scores.

4. Identification method according to one of the preceding claims, in which the complete signal ($S4$) is constructed by affixing the extension signal ($S3_1$, $S3_2$) before and/or after said identifying voice signal ($S4_1$).

5. Identification method according to one of the preceding claims, in which the extension signal ($S3_1$, $S3_2$) is a function of a sum of at least one sinusoid with a frequency of between 50 and 650 Hz, and preferably between 100 and 500 Hz.

6. Identification method according to one of the preceding claims, in which the extension signal ($S3_1$, $S3_2$) results from the product of a parameterizable function ($S1$) and of an observation window function ($S2$), said parameterizable function ($S1$) preferably being amplitude- and/or frequency-modulated.

7. Identification method according to one of the preceding claims, in which:

- the maximum amplitude of the extension signal ($S3_1$, $S3_2$) is less than or equal to the maximum amplitude of the identifying voice signal ($S4_1$), and is preferably less than or equal to 80% of the maximum amplitude of the identifying voice signal ($S4_1$), and/or
- the maximum length of said at least one extension signal ($S3_1$, $S3_2$) is less than or equal to a third of the total length of the complete signal ($S4$) and is preferably equal to 20% of the total length of the complete signal ($S4$).

8. Identification method according to one of the preceding claims, in which the identifying voice signal ($S4_1$) comprises a number of syllables which is less than or equal to four.

9. Method for recording a particular speaker by means of a computer which comprises a computer memory, the method comprising steps of:

- acquiring a recorded voice signal produced by the particular speaker,
- determining an extension signal,
- generating a recorded complete signal which comprises said recorded voice signal and the extension signal,
- determining a reference voice signature in accordance with the recorded complete signal, and
- storing said reference voice signature in said memory so as to be associated with the particular speaker.

10. Motor vehicle comprising a passenger compartment, means for acquiring a voice signal produced by a particular speaker who is located in the passenger compartment, and a computing unit which is programmed to implement a method in accordance with one of the preceding claims.

Figure 1

Figure 2

Figure 3

Figure 4

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **VIBHA TIWARI.** MFCC and its applications in speaker récognition. *International Journal on Emerging technologies,* 2010